# EUROPEAN PATENT SPECIFICATION

(11) **EP 0 824 716 B1**
(45) Date of publication and mention of the grant of the patent: **16.04.2003**
(21) Application number: 96932538.0
(22) Date of filing: 16.09.1996
(51) Int. Cl.: G02C 5/22

(54) **ELASTIC HINGE FOR EYEGLASSES**
ELASTISCHES BRILLENSCHARNIER
CHARNIERE ELASTIQUE POUR LUNETTES

(30) Priority: 29.02.1996 IT PD960048
(43) Date of publication of application: 25.02.1998
(73) Proprietor: VISOTTICA S.p.A., I-31058 Susegana (Province of Treviso) (IT)
(72) Inventor: MONTALBAN, Rinaldo, I-30124 Venezia (IT)
(74) Representative: Modiano, Guido, Dr.-Ing.
(86) International application number: EP9604053
(87) International publication number: WO97032234

(56) References cited:
- EP-A- 0 340 161
- EP-A- 0 596 265
- EP-A- 0 652 456
- FR-A- 2 662 516
- FR-A- 2 664 990
- GB-A- 2 268 282
- US-A- 4 750 828

## Description

### Technical Field

The present invention relates to an elastic hinge for eyeglasses.

### Background Art

It is known that the market currently requires, in increasingly large quantities, eyeglasses that are highly resistant to any deformations that exceed those that are typically functional.

Elastic hinges for eyeglasses have been conceived for this purpose which comprise, at the end of a temple, an elongated hollow body with a flat end.

Said body contains an elastic means that is arranged between the free end of a pin passing therethrough and a contrast element that is locked in said body during operation.

The pin passes through said contrast element, fixing itself to a first hinge element that is pivoted to a second hinge element fixed to the front of the eyeglasses.

Although the above-described hinges allow the temple to which they are applied to perform opening strokes exceeding the functional ones, they are not free from drawbacks.

In particular, in case of breakage of the temple or of the hinge, which is always possible, it is rather difficult and complicated to optionally replace the mechanism and the temple without having to possibly replace the entire block of the elastic hinge.

Furthermore, nowadays the customer tends to use eyeglasses not only as a mere functional accessory but also as an aesthetic-enhancement element that is strongly influenced by fashion and trends.

However, the high cost of spectacle frames prevents, especially in customers having a lower available income, the possibility of having a plurality of frames, each adapted to a particular styling context or to a particular clothing.

### Disclosure of the Invention

The principal aim of the present invention is to provide an elastic hinge for eyeglasses that allows rapid replacement of the mechanism and/or of the temples through an operation that can be performed even by the user without the need for specialized labor.

Accordingly, an object of the present invention is to provide an elastic hinge that is structurally very strong and is adapted to easily withstand opening strokes of the temples that exceed the normal functional opening strokes.

Another object of the present invention is to provide an elastic hinge that allows to achieve aesthetically and stylistically appreciable results while being easy to assemble, with a consequent simplification of the production process.

Another object of the present invention is to provide an elastic hinge the costs whereof are competitive with respect to currently manufactured elastic hinges, also in view of the small number of parts that compose it.

Another object of the present invention is to provide an elastic hinge that can be manufactured with conventional technologies and in which the contrast element can be fixed without the aid of pins, rings, or other elements.

This aim, these objects, and others that will become apparent hereinafter are achieved by an elastic hinge for eyeglasses that comprises, at the end of a temple, an elongated hollow body with a flat open end, said body containing an elastic means that is arranged between the head of a pin passing therethrough and a contrast element that is locked within said body in the functional step, said pin passing through said contrast element and fixing itself to a first hinge element that is pivoted to a second hinge element fixed to the front of the eyeglasses and having a polygonal profile, said first hinge element has a portion to be inserted in said hollow body and having at least two opposite flat faces which, upon assembly, are slideably arranged in a first gap, formed in said contrast element at the end of said contrast element that is directed towards the opening of said hollow body; wherein a protrusion formed as a segment of an annular raised portion extending laterally from said contrast element at both sides of said first gap is adapted to enter in an annular cavity formed at the inner surface of said hollow body, when said contrast element is pushed towards the bottom of said hollow body against said elastic means and rotated about the longitudinal axis by a preset rotation angle, such as to lock said contrast element inside said hollow body.

### Brief description of the Drawings

Further characteristics and advantages of the present invention will become apparent from the following detailed description of an embodiment thereof, illustrated only by way of non-limitative example in the accompanying drawings, wherein:
figure 1 is an axonometric view of an elastic hinge according to the invention;
figure 2 is a partially sectional orthographic projection view of the hinge of figure 1;
figure 3 is an axonometric view of a detail of the hinge of figure 1;
figure 4 is a partially sectional orthographic projection view of another detail of the hinge of figure 1;
figures 5 to 10 are axonometric views of the various steps of the assembly or disassembly of the hinge of figure 1.

### Ways of carrying out the Invention

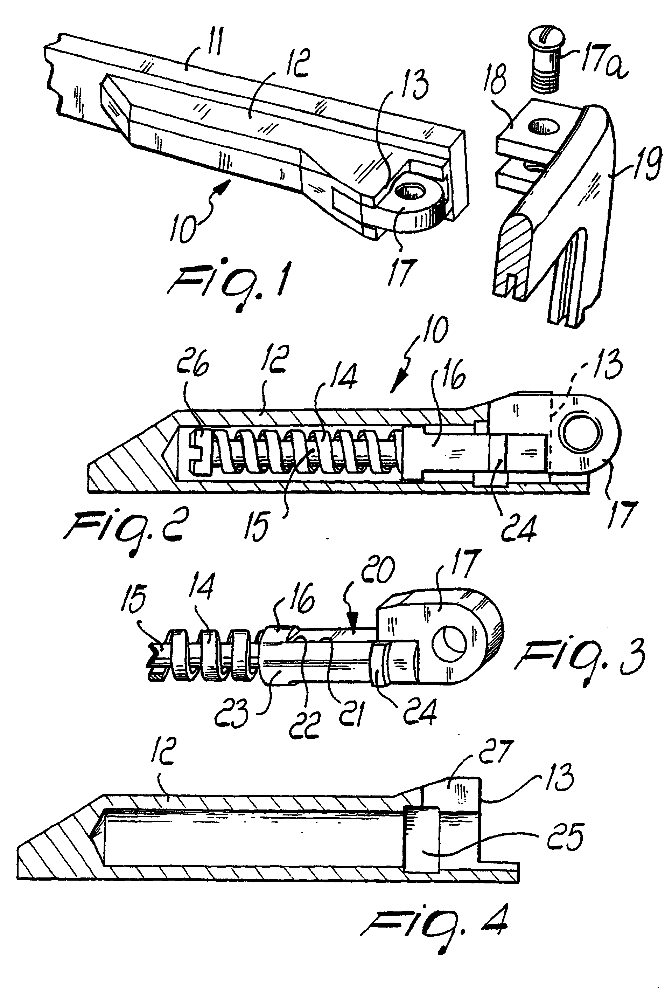

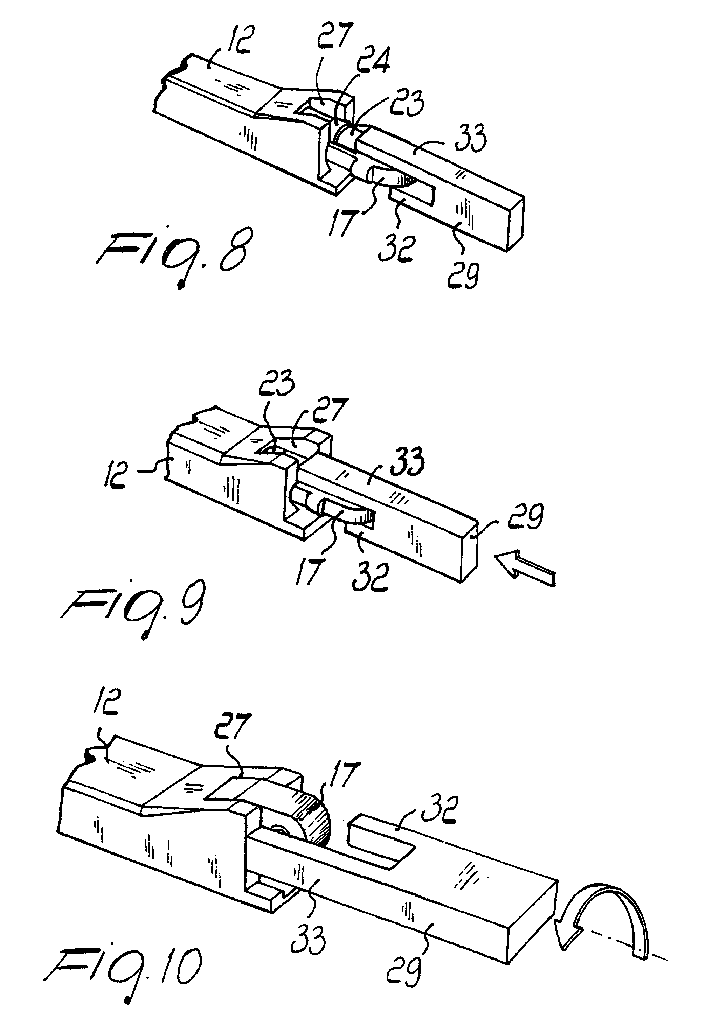

With particular reference to figures 1 to 10, an elastic hinge for eyeglasses, according to the invention, is generally designated by the reference numeral 10.

The hinge 10 comprises, at the end of a temple 11, an elongated hollow body 12 with an open and flat end 13.

The hollow body 12 contains an elastic means, which in this case is constituted by a helical spring 14 that is arranged between the head of a pin 15 passing therethrough, and a contrast element generally designated by the reference numeral 16.

During the functional step, the contrast element 16 is locked within the hollow body 12.

The pin 15 furthermore passes through the entire contrast element and is fixed to a first hinge element 17, which is pivoted, by means of a screw 17a, to a second hinge element 18 which has a polygonal profile and is fixed to the front of the eyeglasses, designated by the reference numeral 19.

The first hinge element 17 has an elongated portion 20 that in this case has a substantially quadrangular cross-section and is provided with two opposite flat faces 21 which, upon assembly, are slideable in a first gap 22 formed in the contrast element 16 at one end thereof, designated by the reference numeral 23, which is directed towards the opening of said hollow body 12.

An annular raised portion 24 protrudes externally from the contrast element 16 at the first gap 22; said raised portion is adapted to enter an annular cavity 25 when the contrast element 16 is pushed towards the bottom of said hollow body 12 in contrast with the helical spring 14 and is rotated about its longitudinal axis through a preset rotation angle by virtue of specific equipment described hereinafter, and said annular cavity 25 is formed at the inner surface of the hollow body 12 and is adapted to lock the contrast element 16 inside said hollow body.

In this case, the pin 15 is threaded, is associated with a screw-and-nut coupling to the first hinge element 17, and has a head 26 that is larger than the rest and is adapted to constitute a pushing contact base for the helical spring 14.

The hollow body 12 also has, at its end 13, a second gap 27 that allows the insertion of part of the first hinge element 17.

Said specific equipment, in this case, is constituted by a tool that is generally designated by the reference numeral 28 and is constituted by a longitudinally elongated body 29 that comprises an active end 30 shaped so as to form a fork 31 provided with two tines 32 and 33, between which the first hinge element 17 is inserted in order to be maneuvered.

In this case, the arm 32 is shorter than the arm 33.

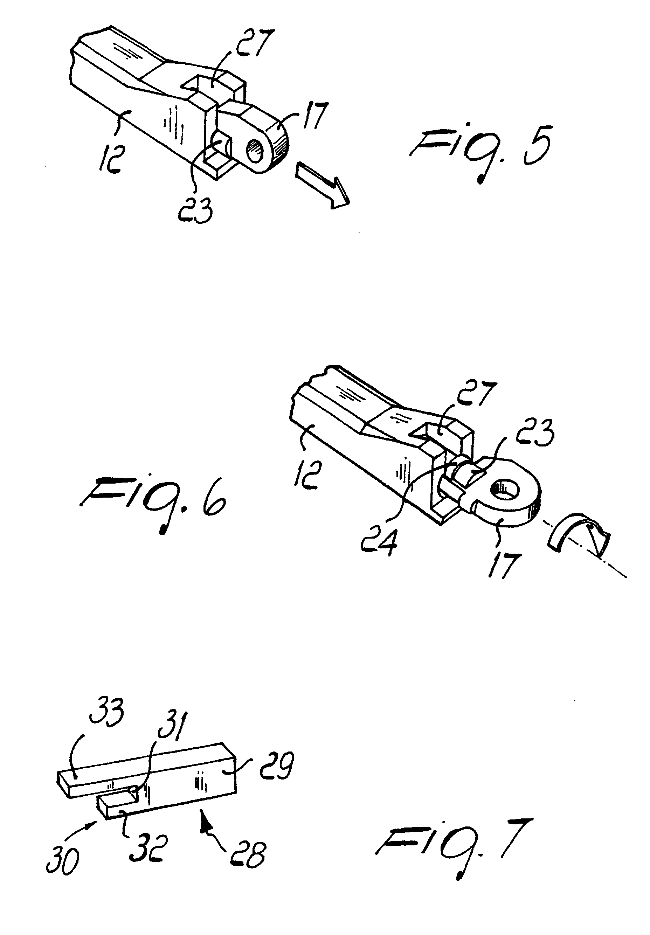

With particular reference to figures 5 to 10, the operation of the hinge 10 is as follows: during assembly, the preassembled unit constituted by the first hinge element 17, by the contrast element 16, by the helical spring 14, and by the pin 15, is inserted in the hollow body 12.

The raised portion 24 is given such a size that in the insertion position said unit cannot be fully inserted within the hollow body 12.

Then, by means of the tool 28, the contrast element 16 is pushed within the hollow body 12, in contrast with the helical spring 14, and an appropriate rotation is furthermore imparted to the first hinge element 17 about the axis of the contrast element 16.

This operations actually occur in close succession; the rotation of the hinge element 17 is in fact allowed only when the raised portion 24 is pushed until it is located at the annular cavity 25.

When the raised portion 24 is inserted in the annular cavity 25 and the axial rotation of the first hinge element 17 has been performed, said raised portion 24 is locked within the hollow body 12 and the helical spring 14 retracts the first hinge element 17 inside the hollow body 12.

Disassembly of the hinge 10 is particularly simple, since it is sufficient to pull out the first hinge element 17 and produce a rotation of approximately 90° about the axis in the opposite direction with respect to the direction mentioned earlier during assembly.

At this point the helical spring 14, loaded by said operation, pushes out the contrast element 16, disconnecting the entire unit from the hollow body 12.

In practice it has been observed that the present invention has solved the intended aim and objects; in particular, it should be noted that the hinge according to the invention can be easily assembled and disassembled even by the user himself if he needs to change the temples of the eyeglasses for maintenance and repair reasons or for purely aesthetic and styling reasons.

It should also be noted that the hinge structure remains essentially simple and can therefore be produced with conventional technologies without particular increases in production costs and times.

The hinge according to the invention, indeed because of its overall structure, can furthermore be easily adapted even to the production of eyeglasses having a high stylistic and aesthetic value.

The extremely solid and sturdy structure of the hinge according to the invention, which allows the temples to perform an opening stroke that exceeds normal functional opening, should also be noted.

The present invention is susceptible of numerous modifications and variations, all of which are within the scope of the inventive concept as defined in the appended claims.

The details may furthermore be replaced with other technically equivalent elements.

The materials and the dimensions may be any according to the requirements.

## Claims

1. Elastic hinge for eyeglasses, comprising, at the end of a temple (11), an elongated hollow body (12) with a flat open end (13), said body (12) containing an elastic means (14) that is arranged between the head of a pin (15) passing therethrough and a contrast element (16) that is locked within said body (12) in the functional step, said pin (15) passing through said contrast element (16) and fixing itself to a first hinge element (17) that is pivoted to a second hinge element (18) that is fixed to the front (19) of the eyeglasses and has a polygonal profile, said first hinge element (17) has a portion (20) to be inserted into said hollow body (12) and having at least two opposite flat faces (21) which, upon assembly, are slideably arranged in a first gap (22), formed in said contrast element (16) at the end (23) of said contrast element that is directed towards the opening (13) of said hollow body (12); **characterized in that** a protrusion formed as a segment of an annular raised portion (24) extending laterally from said contrast element (16) at both sides of said first gap (22) is adapted to enter in an annular cavity (25) that is formed at the inner surface of said hollow body (12), when said contrast element (16) is pushed towards the bottom of said hollow body (12) against said elastic means (14) and rotated about the longitudinal axis by a preset rotation angle, such as to lock said contrast element (16) inside said hollow body (12).

2. Elastic hinge according to claim 1, **characterized in that** said pin (15) is threaded and associated with said first hinge element (17) through a screw-and-nut coupling (17a).

3. Elastic hinge according to claim 2, **characterized in that** said elastic means is constituted by a helical spring (14).

4. Elastic hinge according to one or more of the preceding claims, **characterized in that** said body (12) has, at its free end (13), a second gap (27) adapted to allow the insertion of a part of said first hinge element (17).

## Patentansprüche

1. Elastisches Brillenscharnier umfassend, am Ende eines Bügels (11), einen länglichen Hohlkörper (12) mit einem flachen offenen Ende (13), wobei der Körper (12) ein elastisches Mittel (14) enthält, das angeordnet ist zwischen dem Kopf eines Stifts (15), der hindurchtritt, und einem Gegenelement (16), das im Funktionsschritt in dem Körper (12) verriegelt ist, wobei der Stift (15) durch das Gegenelement (16) hindurchtritt und selbst an einem ersten Scharnierelement (17) befestigt ist, das an einem zweiten Scharnierelement (18) schwenkbar angebracht ist, das an der Vorderseite (19) der Brille befestigt ist und ein polygonales Profil aufweist, das erste Scharnierelement (17) einen Teil (20) zum Einsetzen in den Hohlkörper (12) aufweist und mindestens zwei gegenüberliegende flache Seiten (21) aufweist, die beim Zusammenbau, verschiebbar in einem ersten Spalt (22) angeordnet sind, der in dem Gegenelement (16) am Ende (23) des Gegenelements ausgebildet ist, das zur Öffnung (13) des Hohlkörpers (12) gerichtet ist, **dadurch gekennzeichnet, dass** ein als Segment eines ringförmig erhabenen Teils (24) ausgebildeter Vorsprung, der sich seitlich vom Gegenelement (16) an beiden Seiten des ersten Spalts (22) erstreckt, geeignet ist, in einen ringförmigen Hohlraum (25) einzutreten, der an der Innenfläche des Hohlkörpers (12) ausgebildet ist, wenn das Gegenelement (16) zum Boden des Hohlkörpers (12) gegen das elastische Mittel (14) gedrückt und in einem bestimmten Rotationswinkel um die Längsachse gedreht wird, derart, dass das Gegenelement (16) im Hohlkörper (12) verriegelt wird.

2. Elastisches Scharnier nach Anspruch 1, **dadurch gekennzeichnet, dass** der Stift (15) ein Gewinde aufweist und mit dem ersten Scharnierelement (17) durch eine Kopplung von Schraube und Mutter (17a) verbunden ist.

3. Elastisches Scharnier nach Anspruch 2, **dadurch gekennzeichnet, dass** das elastische Mittel durch eine spiralförmige Feder (14) gebildet ist.

4. Elastisches Scharnier nach einem oder mehreren der vorhergehenden Ansprüche, **dadurch gekennzeichnet, dass** der Körper (12) an seinem freien Ende (13) einen zweiten Spalt (27) aufweist, der geeignet ist, das Einsetzen eines Teils des ersten Scharnierelementes (17) zu ermöglichen.

## Revendications

1. Charnière élastique pour lunettes, comprenant, à l'extrémité d'une branche (11), un corps creux allongé (12) avec une extrémité ouverte plate (13), ledit corps (12) contenant un moyen élastique (14) disposé entre la tête d'un axe (15) passant à travers celui-ci et un élément antagoniste (16) verrouillé à l'intérieur dudit corps (12) pendant l'utilisation, ledit axe (15) passant à travers ledit élément antagoniste (16) et se fixant à un premier élément d'articulation (17) qui pivote par rapport à un deuxième élément d'articulation (18) qui est fixé à l'avant (19) des lunettes et a un profil polygonal, ledit premier élément d'articulation (17) ayant une partie (20) destinée à être insérée dans ledit corps creux (12) et ayant au moins deux faces opposées planes (21) qui, au moment de l'assemblage, sont disposées de manière coulissante dans un premier espace (22), ménagé dans ledit élément antagoniste (16) à l'extrémité (23) dudit élément antagoniste orientée vers l'ouverture (13) dudit corps creux (12) ; **caractérisée en ce qu'**une saillie constituant un segment d'une partie annulaire en relief (24) s'étendant latéralement depuis ledit élément antagoniste (16) sur les deux côtés dudit premier espace (22) est conçue pour entrer dans une cavité annulaire (25) formée dans la surface intérieure dudit corps creux (12), lorsque ledit élément antagoniste (16) est poussé vers le fond dudit corps creux (12) à l'encontre dudit élément élastique (14) et qu'on le fait tourner suivant un angle de rotation prédéterminé autour de l'axe longitudinal, de façon à verrouiller ledit élément antagoniste (16) à l'intérieur dudit corps creux (12).

2. Charnière élastique selon la revendication 1, **caractérisée en ce que** ledit, axe (15) est fileté et assujetti audit premier élément d'articulation (17) par une liaison (17a) à vis et écrou.

3. Charnière élastique selon la revendication 2, **caractérisée en ce que** ledit moyen élastique est constitué par un ressort hélicoïdal (14).

4. Charnière élastique selon une ou plusieurs des revendications précédentes, **caractérisée en ce que** ledit corps (12) comporte, à son extrémité libre (13), un deuxième espace (27) conçu pour permettre l'insertion d'une partie dudit premier élément d'articulation (17).
